# EUROPEAN PATENT APPLICATION

(11) **EP 4 723 320 A1**
(43) Date of publication of application: **08.04.2026**
(21) Application number: 25198897.8
(22) Date of filing: 29.08.2025
(51) Int. Cl.: H01M 50/15, H01M 50/171, H01M 50/176, H01M 50/553

(54) **SECONDARY BATTERY INCLUDING CENTRAL STRUCTURE AND MANUFACTURING METHOD THEREOF**

(30) Priority: 03.09.2024 KR 20240119227
(71) Applicant: SAMSUNG SDI CO., LTD., Yongin-si, Gyeonggi-do 17084 (KR)
(72) Inventor: BYEON, Junho, 17084 Yongin-Si Gyeonggi-do (KR)
(74) Representative: Gulde & Partner

(57) **Abstract**

A secondary battery includes an electrode assembly (100) including a first electrode, a separator, and a second electrode stacked sequentially, a first case (110) configured to accommodate a portion of the electrode assembly (100), a second case (120) configured to accommodate another portion of the electrode assembly (100), and a central structure (130) between the first case (110) and the second case (120).

## Description

### BACKGROUND

### 1. Field

The present disclosure relates to a secondary battery including a central structure and a manufacturing method thereof.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries are used in various environments due to excellent electrical properties thereof. However, in related art pouch batteries, the outer portion is formed of a thin membrane to increase energy density, which may be easily deformed and broken when subjected to physical impact. To overcome this problem, batteries that use stainless steel (SUS) as a case (i.e., a SUS can) may be manufactured by performing four-side welding by butting a can configured to accommodate an electrode assembly and a cover configured to cover an open area against each other and then cutting off the flange portions. In this case, the flange portion remaining after the welding and cutting processes may increase the volume of the secondary battery, thereby limiting the use of the volume. Additionally, during the welding of the stainless steel case, there is a risk of damage or failure due to the welding process, such as heating of the internal electrode assembly.

The above information disclosed in this Background section is for enhancement of understanding of the background of the present disclosure, and therefore, it may contain information that does not constitute related (or prior) art.

### SUMMARY

An aspect of the present disclosure relates to a secondary battery including a central structure and a manufacturing method thereof for solving the above problems.

These and other aspects and features of the present disclosure will be described in or will be apparent from the following description of embodiments of the present disclosure.

To realize the objective, a secondary battery according to an aspect of the present disclosure includes: an electrode assembly including a first electrode, a separator, and a second electrode stacked sequentially. The secondary battery includes a first case configured to accommodate a portion of the electrode assembly. The secondary battery includes a second case configured to accommodate another portion of the electrode assembly. The secondary battery includes a central structure between the first case and the second case. Hence, the electrode assembly needs not to be placed in a housing formed by a tin, whose lit needs to be welded shut with the electrode assembly inside the tin, but can easily be placed in the three-part housing formed by the first case, the second case and the central structure.

According to embodiments, the central structure may include a first surface and a second surface opposite the first surface. The first surface may comprise a first groove to which the first case is configured to be coupled. For example, the first groove may be dimensioned to receive free ends of sidewalls of the first case at least partly. The second surface may include a second groove to which the second case is configured to be coupled. For example, the second groove may be dimensioned to receive free ends of sidewalls of the second case at least partly. An advantage of this embodiment may be that the first and/or second cases are positioned with respect to the central structure.

According to embodiments, each of the first case and/or the second case may include an open area in a first side. The open area may be surrounded by sidewalls of the first case and/or the second case, respectively. An advantage of this embodiment may be that the electrode assembly can be places easily into the first case and/or the second case.

According to embodiments, the first groove may correspond to an open area of the first case. The second groove may correspond to an open area of the second case. For example, the first groove and/or the second groove may surround the open area of the respective one of the first case and the second case. An advantage of this embodiment may be that the first and/or second cases can be connected easily with the central structure with the electrode assembly already being within the first case, the second case or the central structure.

According to embodiments, the central structure may include an internal cavity configured to accommodate a further portion of the electrode assembly. An advantage of this embodiment may be that the central structure may be arranged easily on or around the electrode assembly.

According to embodiments, an adhesive material may be on the first groove and/or in the second groove. The central structure and the first case are fixedly coupled and e.g. glued to each other. The central structure and the second case are fixedly coupled and e.g. glued to each other. An advantage of this embodiment may be that the central structure and the first case and/or the central structure and the second case can be affixed to each other without welding.

According to embodiments, the secondary battery may further include a first terminal and a second terminal. The first terminal and the second terminal may extend through a terminal portion of the central structure. The first electrode and the first terminal may be connected to each other. The second electrode and the second terminal may be connected to each other. An advantage of this embodiment may be that the electrode assembly when housed in the first case, the second case and the central structure, can be electrically connected easily.

According to embodiments, the terminal portion of the central structure may include a conductive metal. An advantage of this embodiment may be that the first case, the second case and the central structure, can be electrically connected easily without the need of further parts. Another advantage of this embodiment may be that the terminal portion is mechanically stable. Another advantage of this embodiment may be that the terminal portion allows for diverting or avoiding e.g. static charge.

According to embodiments, a first insulating layer may be between the first terminal and the terminal portion of the central structure. A second insulating layer may be between the second terminal and the terminal portion of the central structure. An advantage of this embodiment may be that the terminal portion is not inadvertently connected to at least one of the terminals.

According to embodiments, a third insulating layer may be on an inner surface of the terminal portion. The third insulating layer may have a first through-hole associated with the first terminal and a second through-hole associated with the second terminal. An advantage of this embodiment may be that the electrode assembly is easily insulated from the central structure via the third insulation layer.

According to embodiments, in or via the first through-hole, the first terminal and the first electrode may be coupled to each other. In or via the second through-hole, the second terminal and the second electrode may be coupled to each other. An advantage of this embodiment may be that the electrode assembly can be easily connected via the third insulation layer.

According to embodiments, the terminal portion of the central structure may include an insulating material. An advantage of this embodiment may be that at least one of the terminals is insulated from the central structure.

According to embodiments, each of the first case and the second case may include a metal, e.g. including stainless steel. An advantage of this embodiment may be that each of the first case and the second case allows for diverting or avoiding e.g. static charge.

To realize the objective, a manufacturing method of a secondary battery according to another aspect of the present disclosure includes: placing an electrode assembly including a first electrode, a separator, and a second electrode stacked sequentially within a central structure. The method includes coupling the central structure and a first case to each other in a first direction such that the first case accommodates a portion of the electrode assembly. The method includes coupling the central structure and a second case in a second direction such that the second case accommodates another portion of the electrode assembly, wherein the central structure is between the first case and the second case. Hence, the electrode assembly needs not to be placed in a housing formed by a tin, whose lit needs to be welded shut with the electrode assembly inside the tin, but can easily be placed in the three-part housing formed by the first case, the second case and the central structure.

According to embodiments, each of the first case and the second case comprises an open area in a first side. An advantage of this embodiment may be that

According to embodiments, a first surface of the central structure may include a first groove. The first case may be coupled to the first groove. A second surface of the central structure opposite the first surface may include a second groove. The second case may be coupled to the second groove. Coupling or interconnecting the central structure and the first case may include inserting the first case at least partly into the first groove such that the first case is fixedly coupled to the central structure. Coupling or interconnecting the central structure and the second case may include inserting the second case at least partly into the second groove such that the second case is fixedly coupled to the central structure. An advantage of this embodiment may be that the first case and/or the second case are easily positioned by the respective one of the grooves.

According to embodiments, coupling the central structure and the first case may further include applying an adhesive material to the first groove. Coupling the central structure and the second case may further include applying an adhesive material to the second groove. An advantage of this embodiment may be that no welding is required for affixing the first case and/or the second case to the central structure.

According to embodiments, the manufacturing method may further include: coupling or connecting the first electrode of the electrode assembly and a first terminal in or via a first through-hole of the central structure. The manufacturing method may further include: coupling or connecting the second electrode of the electrode assembly and a second terminal in or via a second through-hole of the central structure. An advantage of this embodiment may be that the through-holes facilitate connecting the electrode assembly.

According to embodiments, the first electrode and the first terminal and/or the second electrode and the second terminal may be welded. An advantage of this embodiment may be that the electrodes and terminals are stably interconnected.

According to some embodiments of the present disclosure, welding and cutting processes for coupling stainless steel cases to each other may be omitted in the manufacturing method of a secondary battery to minimize (or at least reduce) the risk of damage and failure of the secondary battery.

According to some embodiments of the present disclosure, the secondary battery may be provided with a structure in which the flange portions remaining after related art welding and cutting processes are removed. This secondary battery structure may minimize (or at least reduce) the unused area of the related art structure, thereby maximizing (or at least increasing) the internal space of the secondary battery in which the electrode assembly is accommodated and the energy density of the entire secondary battery.

According to some embodiments of the present disclosure, a secondary battery having a rigid exterior material while maximizing (or at least increasing) the volume utilization of the secondary battery may be provided.

The first case may be a first shell or a first half-shell. The second case may be a second shell or a second half-shell. The central structure may be a central neck. The central structure may be a part formed separately from the first case and/or the second case. In an assembled state, the first case, the second case and the central structure may form a housing that housing the electrode assembly.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an exploded view showing a secondary battery according to embodiments of the present disclosure;
FIG. 2 illustrates a perspective view schematically showing the shape of a secondary battery manufactured according to embodiments of the present disclosure;
FIG. 3 illustrates a plan view showing the cross-section of a secondary battery according to embodiments of the present disclosure, taken along line A-A of FIG. 2;
FIG. 4 illustrates a plan view showing the cross-section of a secondary battery according to embodiments of the present disclosure, taken along line B-B of FIG. 2;
FIG. 5 illustrates a terminal portion of a secondary battery according to embodiments of the present disclosure and surrounding portions thereof in a cross-sectional view;
FIGS. 6 and 7 illustrate a terminal portion of a secondary battery according to embodiments of the present disclosure in a cross-sectional view; and
FIG. 8 illustrates a flowchart illustrating tasks of a method of manufacturing a secondary battery according to embodiments of the present disclosure in a cross-sectional view.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

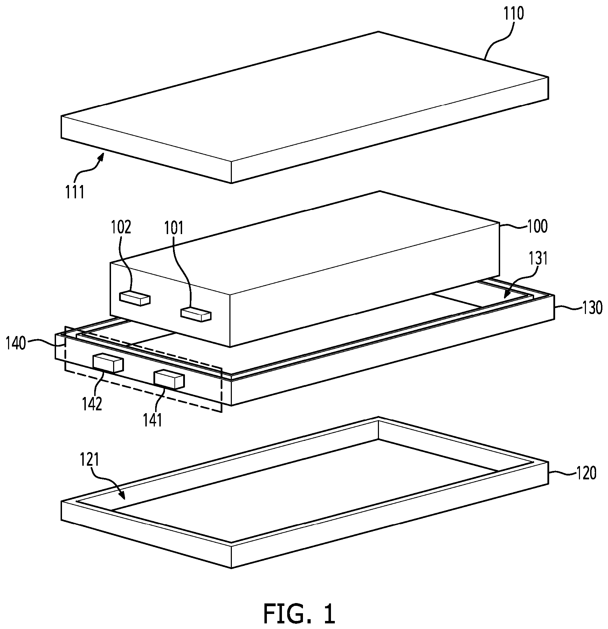

FIG. 1 illustrates an exploded view of a secondary battery according to embodiments of the present disclosure.

Referring to FIG. 1, a secondary battery according to embodiments of the present disclosure may include: an electrode assembly 100 including a first electrode, a separator, and a second electrode stacked sequentially; a first case 110 (e.g., a first case half) configured to accommodate a portion of the electrode assembly 100; a second case 120 (e.g., a second case half) configured to accommodate another portion of the electrode assembly 100; and a central structure 130 between the first case 110 and the second case 120.

The first electrode, the separator, and the second electrode of the electrode assembly 100 may be impregnated with an electrolyte. The first electrode may be an electrode corresponding to a positive electrode or a negative electrode in the secondary battery, and the second electrode may be an electrode corresponding to an opposite polarity to the first electrode. For example, in an embodiment in which the first electrode is a positive electrode, the second electrode may be a negative electrode. Conversely, in an embodiment in which the first electrode is a negative electrode, the second electrode may be a positive electrode.

In one or more embodiments, the first electrode may be a positive electrode formed by coating an aluminum (Al) substrate with a positive electrode active material, and the second electrode may be a negative electrode formed by coating a copper (Cu) substrate with a negative electrode active material. Each of the first electrode and the second electrode may include a coated portion in an area where the active material is applied to the opposite sides of the substrate, which is formed of a thin metal plate, and an uncoated portion in an area where the substrate is exposed because no active material was applied thereto.

In an embodiment, a first electrode tab 101 positioned on a first side of the electrode assembly 100 may extend from the uncoated portion of the first electrode. In one or more embodiments, a second electrode tab 102 positioned on the first side of the electrode assembly 100 may extend from the uncoated portion of the second electrode.

As shown in FIG. 1, in an embodiment, the first electrode tab 101 and the second electrode tab 102 may be provided on at least a first side of the electrode assembly 100. However, the position of each of the first electrode tab 101 and the second electrode tab 102 is not limited to the positions shown in FIG. 1 and may be varied as desired. For example, the first electrode tab 101 and the second electrode tab 102 may be on two opposite sides (or opposite ends) of the electrode assembly 100.

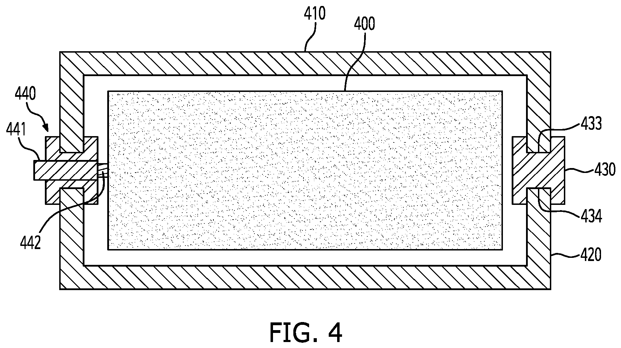

According to an embodiment, the secondary battery may further include a first terminal 141 and a second terminal 142. In one or more embodiments, the first terminal 141 and the second terminal 142 may extend through a terminal portion 140 of the central structure 130. The first terminal 141 and the second terminal 142, which may be integrally coupled to the central structure 130 through the terminal portion 140, will be described later with reference to FIGS. 4 to 7.

As shown in FIG. 1, in an embodiment, the first terminal 141 and the second terminal 142 may be on at least a first side (e.g., the side along which the terminal portion 140 is positioned) of the central structure 130. The positions of the first terminal 141 and the second terminal 142 are not limited to the positions shown in FIG. 1, and may be varied as desired to correspond to the positions of the first electrode tab 101 and the second electrode tab 102. For example, the first terminal 141 and the second terminal 142 may be on two opposite sides (or two opposite ends) of the central structure 130.

According to an embodiment, a current collector or collector may be between the electrode assembly 100 and the center structure 130. The current collector may be electrically connected to the first electrode or the second electrode and configured to function as a conduit to transport electrons during the charging and discharging processes of the secondary battery. In an embodiment, the collector may be formed of (or include) a material(s) selected from aluminum foil, copper foil, nickel foil, stainless steel foil, titanium foil, nickel foam, copper foam, a polymeric substrate coated with a conductive metal, or a combination thereof.

In an embodiment, the first electrode tab 101 may be connected to the first terminal 141 through a first collector electrically connected to the first electrode. In an embodiment, the second electrode tab 102 may be connected to the second terminal 142 through a second collector electrically connected to the second electrode. Accordingly, the first electrode of the electrode assembly 100 and the first terminal 141 may be connected, and the second electrode of the electrode assembly 100 and the second terminal 142 may be connected.

According to an embodiment, the central structure 130 may have an internal cavity 131 configured to accommodate a portion of the electrode assembly 100. For example, the internal cavity 131 may refer to a hollow space within the central structure 130 that corresponds to the shape (or at least a portion thereof) of the electrode assembly 100. In an example, as shown in FIG. 1, the electrode assembly 100 may be shaped as a square column (e.g., a rectangular prism) in which square pole plates are stacked, and the central structure 130 may be shaped as a square ring have a shape and size corresponding to the electrode assembly 100, and the internal cavity 131 may be a square hollow space.

The first case 110 and the second case 120 may form the overall contour of the secondary battery, and may be formed from (or include) a metal including stainless steel, a conductive metal such as aluminum alloy or nickel-plated steel, a polymer, or the like. In an example, for the secondary battery to have a rigid exterior and the secondary battery may be formed from (or include) a metal including stainless steel (SUS).

Together, the first case 110 and the second case 120 may provide a space in which the electrode assembly 100 is accommodated. In embodiments, like the central structure 130, the first case 110 and the second case 120 may have a shape and size corresponding to the electrode assembly 100 to accommodate the electrode assembly 100. As shown in FIG. 1, in an embodiment where the electrode assembly 100 is shaped as a square column (e.g., a square prism) in which square pole plates are stacked, each of the first case 110 and the second case 120 may have the shape of a square can in which an open area is provided in a wide surface on one side thereof.

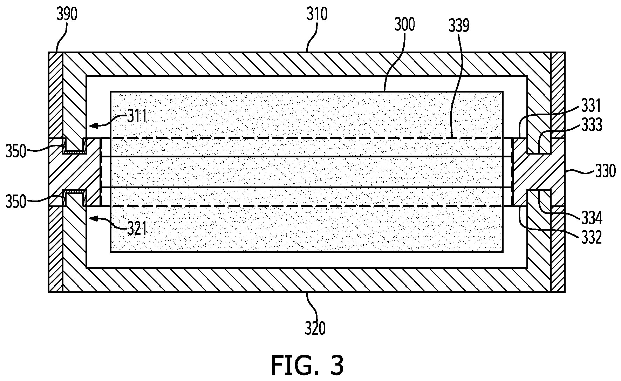

After the internal cavity 131 of the central structure 130 is positioned to accommodate a portion of the electrode assembly 100, the first case 110 and the second case 120 may be coupled to the central structure 130 to seal the internal cavity 131. The configuration of the central structure 130 for this purpose will be described later with reference to FIG. 3.

According to an embodiment, an open area 111 of the first case 110 may be provided on the first side of the first case 110. The first case 110 may accommodate a portion of the electrode assembly 100 through the open area 111 of the first case 110. Similarly, an open area 121 of the second case 120 may be provided on the first side of the second case 120, and the second case 120 may accommodate a portion of the electrode assembly 100 through the open area 121 of the second case 120. The open area 111 of the first case 110 and the open area 121 of the second case 120 may have a shape and size corresponding to the shape and size of the electrode assembly 100.

In an embodiment, the first case 110 or the second case 120 may include an electrolyte inlet. For example, the electrolyte inlet may be a through-hole provided in at least a first side of the first case 110 or the second case 120. The electrolyte inlet may be provided to inject the electrolyte into the secondary battery after the first case 110 and the second case 120 is coupled to the central structure 130 and the internal cavity 131 is sealed. After the electrolyte is injected, the electrolyte inlet may be sealed with a sealing member.

The outer peripheral surface or the inner peripheral surface of each of the first case 110 and the second case 120 may be coated with an insulating coating material having a predetermined thickness. Furthermore, although the first case 110 and the second case 120 are shown in FIG. 1 as angled rectangular cans for purposes of illustrating the present disclosure, the scope of the present disclosure is not limited thereto and it may include cases having any suitable shape, such as a rounded oblong shape or an oval shape.

In one or more embodiments, finishing tape may be attached to and wound around the outer surface of the electrode assembly 100 at least once. The electrode assembly 100 with the finishing tape attached thereto may be positioned within the central structure 130, and the finishing tape may be positioned between the electrode assembly 100 and the central structure 130.

Herein, the finishing tape may be formed from (or include) a highly durable insulating material configured to electrically insulate the electrode assembly 100 from the central structure 130. In an example, the finishing tape may be formed from (or include) an insulating polymer including polypropylene (PP), polyimide (PI), ethylene propylene rubber (EPDM), polyethylene terephthalate (PET), polycarbonate (PC), polytetrafluoroethylene (PTFE), or a combination thereof. However, the material of the finishing tape is not limited to the materials listed above and the finishing tape may include a variety of other highly plastic and insulating materials known in the art.

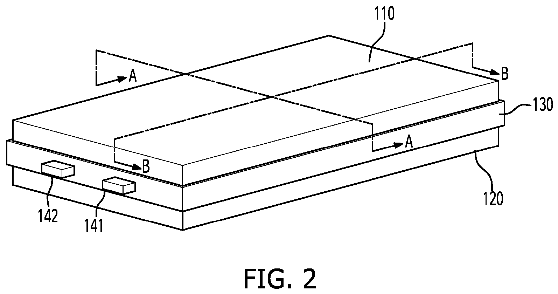

FIG. 2 illustrates a perspective view schematically showing a secondary battery manufactured according to embodiments of the present disclosure.

Referring to FIG. 2, the outer surface of the electrode assembly (e.g., the electrode assembly 100 of FIG. 1) in the secondary battery may have finishing tape attached thereto to prevent (or at least mitigate) the electrode assembly from moving up and down or back and forth within the internal cavity 131 of the central structure 130, within the first case 110, or within the second case 120.

Accordingly, connecting portions where the components of the secondary battery, such as the first terminal 141 or the second terminal 142, and the electrode assembly are connected may be prevented (or at least mitigated) from being separated or damaged due to the movement of the electrode assembly, and even in a event in which the electrode assembly is over-expanded by charging and discharging, cracks in the central structure 130, the first case 110, the second case 120, or the electrode assembly itself may be reduced (e.g., mitigated or minimized) by buffering.

The secondary battery according to embodiments of the present disclosure may include a lithium-ion battery cell, or the like. However, the scope of the present disclosure is not limited thereto, and the battery cell or the secondary battery may include any battery capable of repeatedly providing electricity by charging and discharging. The secondary battery according to embodiments may be applied to or incorporated into automobiles, cellular phones, and/or various other types of electrical devices, but the present disclosure is not limited to any particular device.

According to some embodiments of the present disclosure, a secondary battery having a rigid exterior material while maximizing (or at least increasing) the volume utilization of the secondary battery may be provided.

FIG. 3 illustrates a plan view showing the cross-section of a secondary battery according to embodiments of the present disclosure, taken along line A-A of FIG. 2.

Referring to FIG. 3, a first surface 331 (e.g., an upper surface) of the central structure 330 may include a first groove 333 to which a first case 310 is configured to be coupled, and a second surface 332 (e.g., a lower surface) of the central structure 330 may include a second groove 334 to which the second case 320 is configured to be coupled. The central structure 330 may also include an internal cavity 339 configured to accommodate a portion of the electrode assembly 300. The internal cavity 339 may refer to a space having the inner peripheral surface of the central structure 330 as a closed curved (or angled) surface.

For example, the first surface 331 or the second surface 332 of the central structure 330 may refer to a side between the outer peripheral surface and the inner peripheral surface of the central structure 330 having a closed ring shape (e.g., a square or rectangular ring shape). In an example, in the central structure 330 shown in FIG. 3, the first surface 331 may refer to a surface facing in the direction of the first case 310, and the second surface 332 may refer to a surface facing in the direction of the second case 320.

Herein, the second surface 332 of the central structure 330 may be opposite to the first surface 331 of the central structure 330. Accordingly, the first groove 333 included in the first surface 331 and the second groove 334 included in the second surface 332 may also be opposite to each other (e.g., the first surface 331 and the second surface 332 may face away from each other). In other embodiments, the first case 310, which is configured to engage with the first groove 333, and the second case 320, which is configured to engage with the second groove 334, may also be opposite each other.

According to an embodiment, the first groove 333 on or in the first surface 331 of the central structure 330 may correspond to an open area 311 of the first case 310, and the second groove 334 on or in the second surface 332 of the central structure 330 may correspond to an open area 321 of the second case 320. In one or more embodiments, the first groove 333 may be in the shape of a closed ring recessed at a predetermined depth along the periphery of the central structure 330. The width of the first groove 333 may correspond (or substantially correspond) to the thickness of the metal plate of the open area 311 of the first case 310. Accordingly, the open area 311 of the first case 310 may be fitted into (or accommodated in) the first groove 333.

The second groove 334 may have the shape of a closed ring recessed at a predetermined along the periphery of the central structure 330 like the first groove 333, and the width of the second groove 334 may correspond (or substantially correspond) to the thickness of the metal plate of the open area 321 of the second case 320. Accordingly, the open area 321 of the second case 320 may be fitted into (or accommodated in) the second groove 334. The shape of the first groove 333 and the shape of the second groove 334 may be different, but may be symmetrical (or substantially symmetrical) to each other to simplify the process of manufacturing a secondary battery.

According to an embodiment, the first groove 333 and the second groove 334 may have an adhesive material or substance 350 applied thereto. Due to the adhesive properties of the adhesive material or substance 350, the central structure 330 and the first case 310 may be fixedly coupled to each other, and the central structure 330 and the second case 320 may be fixedly coupled to each other.

The adhesive material 350 may include a material having high adhesive strength to bond the first case 310 to the central structure 330 and the second case 320 to the central structure 330. In an embodiment, the adhesive material 350 may be formed of (or include) a material including an epoxy resin, a polyurethane adhesive, a silicone adhesive, a cyanoacrylate, a polyvinyl acetate (PVA), a polyimide adhesive, a polyamide adhesive, a UV curable adhesive, or a combination thereof. However, the material of the adhesive material 350 is not limited to the materials listed above, and may include a variety of materials having sufficient adhesive properties.

While related art secondary batteries having a rigid exterior material such as stainless steel (SUS) include unnecessary flange portions because a cover case in contact with a body case having a cup shape to accommodate the electrode assembly is sealed by welding and cutting processes, the secondary battery according to the present disclosure seals the electrode assembly 300 housed in the internal cavity 339 with the central structure 330 (e.g., by interference fitting), thereby minimizing (or at least reducing) an unused area 390.

According to some embodiments of the present disclosure, the secondary battery may be provided with a structure in which the flange portions remaining after conventional welding and cutting processes are removed. This secondary battery structure may minimize (or at least reduce) the unused area 390 of the conventional structure, thereby maximizing (or at least increasing) the internal space of the secondary battery in which the electrode assembly is accommodated and thus maximizing (or at least increasing) the energy density of the entire secondary battery.

FIG. 4 illustrates a plan view showing the cross-section of a secondary battery according to embodiments of the present disclosure, taken along line B-B of FIG. 2.

Referring to FIG. 4, a first terminal 441 may extend through a terminal portion 440 of the central structure 430. Herein, the terminal portion 440 may refer to a first side of the central structure 430. In an embodiment, the central structure 430 may be formed from a single material such that the central structure 430, but not the terminal portion 440, may be integrally formed. In another embodiment, the central structure 430 may be integrally formed to include the terminal portion 440. The terminal portion 440 may include a first groove 433 and a second groove 434 as portions of the central structure 430. The first groove 433 is configured to be coupled to the first case 410, and the second groove 434 is positioned in an opposite direction to the first groove 433 and is configured to be coupled to the second case 420.

In an embodiment, the first terminal 441 may extend through the space between the first groove 433 and the second groove 434.

In other embodiments, the first terminal 441 may be connected to a first electrode tab 442 positioned on a first side of an electrode assembly 400. For example, the first terminal 441 may be connected to the first electrode tab 442 extending from an uncoated portion of the first electrode of the electrode assembly 400. In an embodiment, a first collector may be between the first terminal 441 and the first electrode tab 442.

The first electrode tab 442 and the first terminal 441 may be joined by welding. The welding may be performed by one of ultrasonic welding, laser welding, resistance welding, tungsten inert gas (TIG) welding, or a combination thereof. The welding method is not limited to the types of welding listed above, and may include any method commonly used in the art for welding two materials.

In an embodiment, the second terminal may also extend through the terminal portion 440 of the central structure 430 in the same manner as the first terminal 441. The second terminal may be connected to a second electrode tab extending from an uncoated portion of a second electrode of the electrode assembly 400, and a second collector may be between the second terminal and the second electrode tab. The method of coupling the second electrode tab and the second terminal may be the same as the method of coupling the first electrode tab 442 and the first terminal 441.

According to an embodiment, the terminal portion 440 of the central structure 430 may be formed from (or include) an insulating material. For example, the terminal portion 440 may be formed from (or include) an insulating material having relatively high insulating properties to electrically insulate the first case 410 and the first terminal 441 coupled to the first groove 433 of the central structure 430 from the second case 420 and the second terminal coupled to the second groove 434 of the central structure 430.

In an example, a terminal portion 440 may be formed from (or include) a polymer including ethylene propylene rubber (EPDM), polypropylene (PP), polyimide (PI), polyethylene terephthalate (PET), polycarbonate (PC), polytetrafluoroethylene (PTFE), or a combination thereof.

In another example, the terminal portion 440 may be formed from (or include) a ceramic material including parylene, Al₂O₃, zirconia, ZrO₂, aramid fiber, Nomex, epoxy resin, or a combination thereof. However, the material of the terminal portion 440 is not limited to the materials listed above and it may include any suitably durable and insulating material(s).

In an embodiment, the central structure 430 may be integral with the terminal portion 440 such that the entire central structure 430 is formed from the same material as the insulating material described above.

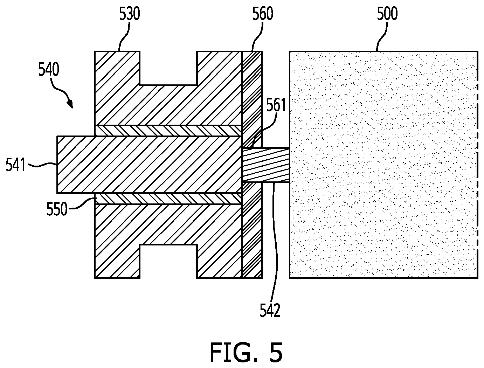

According to another embodiment, the terminal portion 440 of the central structure 430 may be formed from (or include) a conductive metal. Referring to FIGS. 5 to 7, the terminal portion 440 formed from (or including) a conductive metal will be described.

FIG. 5 illustrates a terminal portion of a secondary battery according to embodiments of the present disclosure and surrounding portions thereof.

Referring to FIG. 5, a terminal portion 540 of a central structure 530 may be formed from (or include) a conductive metal. In an example, the terminal portion 540 of the central structure 530 may be formed from (or include) a conductive metal such as an aluminum alloy, a metal including stainless steel (SUS), nickel-plated steel, a copper alloy, a titanium alloy, a magnesium alloy, or zinc-plated steel. However, the material of the terminal portion 540 is not limited to the materials listed above and it may include any suitably durable and conductive material(s).

According to an embodiment, a first insulating layer 550 may be between a first terminal 541 and a terminal portion 540 of the central structure 530. The first insulating layer 550 may insulate between the first terminal 541 and the terminal portion 540 of the central structure 530 to prevent (or at least mitigate) unintended circuits from forming between the first terminal 541 electrically connected to a first electrode of an electrode assembly 500 and the conductive terminal portion 540.

According to an embodiment, a third insulating layer 560 may be on the inner surface of the terminal portion 540. The third insulating layer 560 may include a first through-hole 561 associated with the first terminal 541 and a second through-hole associated with a second terminal.

For example, the first through-hole 561 may refer to a hole that penetrates the third insulating layer 560 and that conforms (or substantially conforms) to the shape of the first electrode tab 542 such that the third insulating layer 560 is not provided between the first terminal 541 and the first electrode tab 542. Accordingly, in the first through-hole 561, the first terminal 541 and the first electrode of the electrode assembly 500 may be coupled to each other.

The third insulating layer 560 may insulate between the electrode assembly 500 and the terminal portion 540 of the conductive central structure 530 to prevent (or at least mitigate) unintended circuits from forming between the electrode assembly 500 and the terminal portion 540.

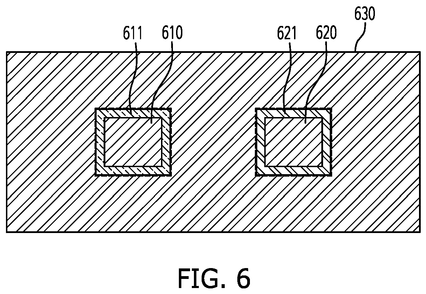

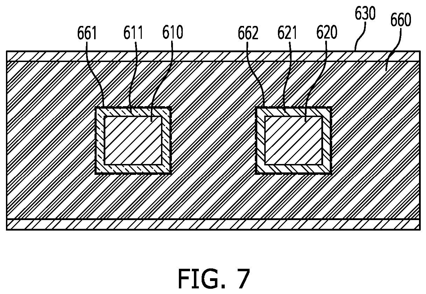

FIGS. 6 and 7 illustrate a terminal portion of a secondary battery according to embodiments of the present disclosure.

FIG. 6 illustrates the shape of a central structure 630 viewed from the outside.

In an embodiment, a first insulating layer 611 may be between a first terminal 610 and a terminal portion of a central structure 630. In an embodiment, a second insulating layer 621 may be between a second terminal 620 and the terminal portion of the central structure 630.

FIG. 7 illustrates the shape of the central structure 630 viewed from the inside.

According to an embodiment, a third insulating layer 660 may be on an inner surface of the terminal portion, and may include a first through-hole 661 associated with a first terminal 610 and a second through-hole 662 associated with a second terminal 620. For example, the first through-hole 661 may correspond (or substantially correspond) to the shape of a first electrode tab (e.g., 542 in FIG. 5) such that the third insulating layer 660 is not provided between the first terminal 610 and a first electrode tab. Similarly, the second terminal 620 and a second electrode tab may be coupled to each other in the second through-hole 662 in the third insulating layer 660.

An adhesive material may be on a region between the first terminal 610 and a first insulating layer 611 and/or between the second terminal 620 and a second insulating layer 621.

In an example, the adhesive material may be formed of (or include) a material including an epoxy resin, a polyurethane adhesive, a silicone adhesive, a cyanoacrylate, polyvinyl acetate (PVA), a polyimide adhesive, a polyamide adhesive, a UV curable adhesive, or a combination thereof. However, the material of the adhesive material is not limited to the materials listed above and may include any suitable material(s) having sufficiently high adhesive strength.

The first insulating layer 611, the second insulating layer 621, and the third insulating layer 660 may be formed from (or include) a sufficiently durable insulating material. In an example, each of the first insulating layer 611, the second insulating layer 621, and the third insulating layer 660 may be formed from (or include) polypropylene (PP), polyimide (PI), ethylene propylene rubber (EPDM), polyethylene terephthalate (PET) polycarbonate (PC), polytetrafluoroethylene (PTFE) or Teflon, or a combination thereof. However, the materials of the first insulating layer 611, the second insulating layer 621, and the third insulating layer 660 are not limited to the materials listed above, and may include any suitable plastic and insulating material(s) known in the art.

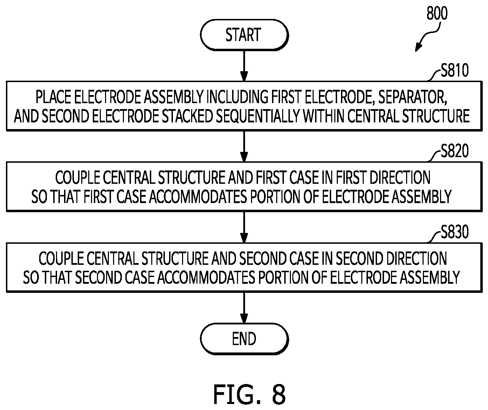

FIG. 8 illustrates a flowchart showing an embodiment of a method of manufacturing a secondary battery according to embodiments of the present disclosure.

A manufacturing method 800 of a secondary battery according to embodiments of the present disclosure may begin by placing an electrode assembly including a first electrode, a separator, and a second electrode stacked sequentially within a central structure in S810. The central structure may include an internal cavity configured to accommodate a portion of the electrode assembly. Further, the central structure may be between a first case and a second case. According to an embodiment, a first surface (e.g., an upper surface) of the central structure may have a first recess into which the first case is coupled, and a second surface (e.g., a lower surface) of the central structure opposite the first surface may have a second groove to which the second case is coupled.

According to an embodiment, a terminal portion of the central structure may be formed from (or include) a conductive metal. A first terminal and a second terminal may extend through the terminal portion of the central structure, a first insulating layer may be between the first terminal and the terminal portion of the central structure, and a second insulating layer may be between the second terminal and the terminal portion of the central structure. In other embodiments, a third insulating layer may be on the inner surface of the terminal portion, and may include a first through-hole associated with the first terminal and a second through-hole associated with the second terminal. In one or more embodiments, the terminal portion of the central structure may be formed from (or include) an insulating material.

Thereafter, in S820, the central structure and the first case may be coupled to each other in a first direction, such that the first case receives a portion of the electrode assembly. The operation S820 of coupling the central structure and the first case to each other may include inserting the first case into the first groove to be fixedly coupled thereto. In one or more embodiments, an open area may be formed on a first side (e.g., a lower side) of the first case, and the first groove may correspond to the open area of the first case.

Thereafter, in S830, the central structure and the second case may be coupled to each other in a second direction, such that the second case receives another portion of the electrode assembly. Herein, the operation S830 of coupling the central structure and the second case to each other may include inserting the second case into the second groove to be fixedly coupled thereto. In one or more embodiments, an open area may be on a first side (e.g., an upper side) of the second case, and the second groove may correspond to the open area of the second case. According to an embodiment, each of the first case and the second case may be formed from (or include) a metal including stainless steel (SUS).

The operation of coupling the central structure and the first case to each other according to an embodiment may further include applying an adhesive material to the first groove. Similarly, the operation S830 of coupling the central structure and the second case to each other according to an embodiment may further include applying an adhesive material to the second groove.

The manufacturing method 800 of a secondary battery according to embodiments may further include an operation of connecting a first terminal to the first electrode of the electrode assembly in the first through-hole of the central structure and an operation of connecting the second terminal to the second electrode of the electrode assembly in the second through-hole of the central structure. Herein, the first terminal and the second terminal may be formed to extend through the terminal portion of the central structure. According to an embodiment, the first electrode and the first terminal may be joined by welding and/or the second electrode and the second terminal may be joined by welding.

For example, the first electrode and the first terminal and/or the second electrode and the second terminal may be welded by a method selected from ultrasonic welding, laser welding, resistance welding, tungsten inert gas (TIG) welding, or a combination thereof. The welding method is not limited to the types of welding listed above, and it may include any method(s) commonly used in the art for welding two materials.

The secondary battery according to embodiments of the present disclosure may be used in automobiles, cellular phones, and/or various other forms of electrical devices, but the present disclosure is not limited thereto.

According to some embodiments of the present disclosure, welding and cutting processes for coupling stainless steel cases to each other (which are utilized in related art processes of manufacturing secondary batteries) may be omitted in the manufacturing method of a secondary battery to minimize (or at least reduce) the risk of damage and failure of the secondary battery.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. A secondary battery comprising:
an electrode assembly (100) comprising a first electrode, a separator, and a second electrode stacked sequentially;
a first case (110) configured to accommodate a portion of the electrode assembly (100);
a second case (120) configured to accommodate another portion of the electrode assembly (100); and
a central structure (130) between the first case (110) and the second case (120).

2. The secondary battery as claimed in claim 1, wherein a first surface (331) of the central structure (330) comprises a first groove (333), the first case (310) being coupled to the first groove (333), and
a second surface (332) of the central structure (330) opposite to the first surface (331) comprises a second groove (334), the second case (320) being coupled to the second groove (334).

3. The secondary battery as claimed in claim 1 or 2, wherein each of the first case (110, 310) and the second case (120, 320) comprises an open area (111, 121, 311, 321) in a first side.

4. The secondary battery as claimed in claim 3 when depending from claim 2, wherein the first groove (333) corresponds to the open area (311) of the first case (310), and
wherein the second groove (334) corresponds to the open area (321) of the second case (320).

5. The secondary battery as claimed in any of claims 2 to 4, further comprising an adhesive material in the first groove (333) and the second groove (334), wherein the central structure (330) and the first case (310) are fixedly coupled to each other, and wherein the central structure (330) and the second case (320) are fixedly coupled to each other.

6. The secondary battery as claimed in any of claims 1 to 5, further comprising a first terminal (141) and a second terminal (142),
wherein the first terminal (141) and the second terminal (142) extend through a terminal portion (140) of the central structure (130),
wherein the first electrode and the first terminal (141) are coupled to each other, and
wherein the second electrode and the second terminal (142) are coupled to each other.

7. The secondary battery as claimed in claim 6, wherein the terminal portion (140) of the central structure (130) comprises a conductive metal.

8. The secondary battery as claimed in claim 7, further comprising:
a first insulating layer (611) between the first terminal (550, 610) and the terminal portion (540) of the central structure (530, 630), and
a second insulating layer (621) between the second terminal (620) and the terminal portion (540) of the central structure (530, 630).

9. The secondary battery as claimed in claim 7 or 8, further comprising a third insulating layer (560, 660) on an inner surface of the terminal portion (540),
wherein the third insulating layer (560, 660) comprises a first through-hole (561, 661) associated with the first terminal (541, 610) and a second through-hole (662) associated with the second terminal (620).

10. The secondary battery as claimed in claim 9, wherein the first terminal (541, 610) and the first electrode are coupled to each other in or via the first through-hole (561, 661), and
wherein the second terminal (620) and the second electrode are coupled to each other in or via the second through-hole (662).

11. A manufacturing method (800) of a secondary battery, the manufacturing method (800) comprising:
placing (S810) an electrode assembly (100) comprising a first electrode, a separator, and a second electrode stacked sequentially within a central structure (130);
coupling (S820) the central structure (130) to a first case (110) to each other in a first direction such that the first case (110) accommodates a portion of the electrode assembly (100); and
coupling (S830) the central structure (130) to a second case (120) in a second direction such that the second case (120) accommodates another portion of the electrode assembly (100),
wherein the central structure (130) is between the first case (110) and the second case (120).

12. The manufacturing method (800) as claimed in claim 11, wherein each of the first case (110, 310) and the second case (120, 320) comprises an open area (111, 121, 311, 321) in a first side.

13. The manufacturing method (800) as claimed in claim 11 or 12, wherein a first surface (331) of the central structure (330) comprises a first groove (333), the first case (310) being coupled to the first groove (333),
wherein a second surface (332) of the central structure (330) opposite to the first surface (331) comprises a second groove (334), the second case (320) being coupled to the second groove (334), and
wherein coupling the central structure (330) to the first case (310) comprises inserting the first case (310) into the first groove (333).

14. The manufacturing method (800) as claimed in claim 13, wherein the coupling the central structure (330) to the first case (310) further comprises applying an adhesive material to the first groove (333).

15. The manufacturing method (800) as claimed in claim 11, further comprising:
coupling the first electrode of the electrode assembly (100) to a first terminal (610) in or via a first through-hole (661) of the central structure (630); and
coupling the second electrode of the electrode assembly (100) to a second terminal (620) in or via a second through-hole (662) of the central structure (630).
